(19) Europäisches Patentamt
European Patent Office
Office européen des brevets

(11) **EP 4 697 541 A1**

(12) **EUROPEAN PATENT APPLICATION**

(43) Date of publication:
**18.02.2026 Bulletin 2026/08**

(51) International Patent Classification (IPC):
***H02J 3/24*** (2006.01)   ***H02J 3/38*** (2026.01)
***H02J 3/46*** (2026.01)

(21) Application number: **24194303.4**

(22) Date of filing: **13.08.2024**

(52) Cooperative Patent Classification (CPC):
**H02J 3/46; H02J 3/00142; H02J 3/381; H02J 3/40;**
**H02J 3/48;** H02J 2103/30; H02J 2103/35

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **Mohanaveeramani, Aravind**
  **72219 Västerås (SE)**
• **Wang, Cici-SiHan**
  **Beijing, 100000 (CN)**
• **Nahalparvari, Mehrdad**
  **168 65 Bromma (SE)**

(74) Representative: **Valea AB**
  **Box 1098**
  **405 23 Göteborg (SE)**

(54) **GRID-FORMING CONTROL METHOD AND SYSTEM WITH INERTIA LIMITATION FOR POWER ELECTRONIC DEVICES**

(57)     A control system (100) and a grid-forming control method for adjusting a voltage vector of an output signal generated by a power electronic device (111) are provided. The control system (100) is configured to generate a virtual angle value ($\theta$) for adjusting an angle ($\delta_v$) of the voltage vector of the output signal; generate a virtual voltage value ($|V_v|$) for adjusting the magnitude ($V_v$) of the voltage vector of the output signal; and control the frequency and magnitude of the output signal generated by the power electronic device (111) based on the virtual angle value ($\theta$) and virtual voltage value ($|V_v|$). The virtual angle value ($\theta$) is generated based on an inertia value ($H$), a measured power and frequency of the output signal. The control system (100) is configured to set the inertia value ($H$) such that the inertia value ($H$) is varied between a maximum value and a pre-set minimum value based on a current magnitude ($|I_m|$) of the output signal of the power electronic device (111).

Fig. 1

EP 4 697 541 A1

**Description**

TECHNICAL FIELD

Embodiments herein relate to grid-forming control method and system for power electronic devices. In particular, they relate to grid-forming method and system for controlling an output signal of a power electronic device to be operated in off-grid mode or on-grid mode in a power system network with an electrical grid.

BACKGROUND

The recent trends to achieve global carbon neutrality push countries towards decommissioning coal-based power plants to more greener solutions such as wind or solar power generation which typically do not have the same inertial characteristics as conventional generators. This is leading to a reduction in overall inertia in power system network. Inertia refers to the ability of a power system to resist changes in frequency due to sudden imbalances between power supply and demand. This inertial concept is crucial for maintaining the stability and reliability of an electricity grid. The reduction of overall inertia in power system network leads to stability concerns. Thus, it is becoming a requirement to have Grid-Forming Control (GFC) for all power electronic devices or products, such as inverters, Voltage Source Converters (VSCs), electrical power generators etc., connected to an electrical grid network, especially for medium and high-voltage systems. VSCs are usually used in electrical systems to interface renewable energy sources, energy storage systems, or other power sources with the electrical grid. A VSC having GFC or operating in GFC mode, unlike grid-following converters that rely on the existing grid frequency and voltage, can actively control both voltage and frequency of its output signal to establish and maintain stability and synchronization of the electrical grid. In GFC mode, the VSC behaves like a traditional synchronous generator, actively contributing to the grid's stability and maintaining its own frequency and voltage references. Even though it is not a mandatory requirement to have GFC for the low voltage systems, it is expected in future to have similar requirements. Moreover, even today for an off-grid system where e.g. several VSCs are connected in the same bus, GFC proves to be a robust solution. In the off-grid mode of operation, i.e. when a power electronic product, e.g. a VSC, is disconnected from the main electrical grid, operating independently or autonomously within its own isolated network, the power electronic product is expected to establish its network voltage and frequency i.e., operate in Voltage Source Mode (VSM). VSM refers to the operation of inverters or converters where they control and maintain a stable voltage at their output terminals, effectively acting as a voltage source. In VSM, the inverters or converters take responsibility for establishing and regulating the voltage and frequency of the power system, and have grid-forming functionalities i.e., emulate inertia to ensure a robust off-grid network.

The core of a grid-forming control method is power synchronization i.e., use power information to generate voltage phase-angle instead of using a phase-locked loop (PLL) as it is done with grid-connected controls which is fundamentally emulating the swing equation. The swing equation is a fundamental differential equation used in power system analysis to model the dynamic behavior of synchronous generators. Based on, how the damping is introduced, how the current saturation is handled, and how the inertia is emulated, several grid-forming control schemes are derived and available in the literature. Each of the method has its own advantages and disadvantages and meets a specific purpose.

Rate of Change of Frequency (ROCOF) is a rate at which the frequency of an alternating current (AC) of power system changes over time. In power systems, the frequency of the AC usually measured in Hertz (Hz) is an important parameter that indicates the balance between generation and consumption of electrical power. When a power electronic device, e.g. a voltage converter, is subject to ROCOF of e.g. 2.5 Hz/s for a duration of 1s, the converter power quickly reaches its maximum of 1 per unit (p.u.) following an emulation of an inertia value set or desired by a customer and loses synchronisation when current saturates, leading to a converter trip. Improvements have been made in control methods to address this problem by switching from grid-forming control to grid-following control i.e., to enable a PLL during current saturation to maintain synchronism. Though these methods show improvements, they still fail under high ROCOF and off-grid scenarios.

SUMMARY

Therefore it is an object of embodiments herein to provide an improved grid-forming control method and system for power electronic devices to be operated in off-grid mode or on-grid mode in a power system network with an electrical grid.

According to a first aspect of embodiments herein, the object is achieved by a grid-forming control method for adjusting a voltage vector $V_v$, $\delta_v$ of an output signal generated by a power electronic device. The method comprises generating a virtual angle value $\theta$ for adjusting an angle $\delta_v$ of the voltage vector $V_v$, $\delta_v$ of the output signal; generating a virtual voltage value $|V_v|$ for adjusting the magnitude $V_v$ of the voltage vector of the output signal; and controlling the frequency and magnitude of the output signal generated by the power electronic device based on the virtual angle value $\theta$ and virtual voltage value $|V_v|$. The virtual angle value is generated based on an inertia value H, a measured power and frequency of the output signal. The inertia value H is set such that it is varied between a maximum value and a pre-set minimum value based on a current magnitude $|I_m|$ of the output signal of the power electronic device.

According to some embodiments herein, the inertia value H may be varied linearly or non-linearly in relation to the current magnitude of $|I_m|$ the output signal.

According to some embodiments herein, the inertia value H may be generated based on a look-up table or an equation representing a relationship between the inertia value H and the current magnitude of $|I_m|$ the output signal.

According to some embodiments herein, the inertia value *H* may be set to the pre-set minimum value when the current magnitude of $|I_m|$ the output signal exceeds a threshold.

According to some embodiments herein, the inertia value *H* may be generated by a Hysteresis-band control module.

According to some embodiments herein, when the current magnitude exceeds an upper limit, the inertia value *H* may be reduced to the pre-set minimum value and stays at this value until the current magnitude goes lower than a lower limit.

According to some embodiments herein, the method for generating the virtual angle value $\theta$ may comprises generating, by e.g. a first subtractor module, a first power difference between a power setting value $P_{set}$ and a feedback value of power-frequency droop setting $K_{fdrp}$ of the power electronic device; generating, e.g. by a limiter module, a limited first power difference by limiting the first power difference within a range of a first and second power limiting value $P_{lim}$, $-P_{lim}$; generating, e.g. by a second subtractor module, a second power difference $\Delta P^{pu}$ between the limited first power difference and a measured output power $P_g^{pu}$ of the power electronic device; generating, e.g. by a multiplier module, an adjusted power difference by multiplying the second power difference $\Delta P^{pu}$ with a factor related to an inertia value *H*; generating, e.g. by a first integrator, a virtual frequency difference $\Delta \omega_v^{pu}$ by integrating the adjusted power difference; generating, e.g. by a third subtractor, a measured frequency difference between the virtual frequency difference $\Delta \omega_v^{pu}$ and a frequency damping factor derived from the measured power $P_g^{pu} \cdot R^g$; generating, e.g. by an adder module, a virtual frequency value $\omega_v^{pu}$ by adding a nominal frequency value $\omega_n^{pu}$ to the measured frequency difference; generating, e.g. by a second integrator, the virtual angle value ($\theta$) by integrating the virtual frequency value $\omega_v^{pu}$.

According to a second of embodiments herein, the object is achieved by a control system configured to perform the method described above for adjusting a voltage vector of an output signal generated by a power electronic device.

According to a third aspect of embodiments herein, the object is achieved by a power electronic device comprising a control system configured to perform the method described above for adjusting a voltage vector of an output signal generated by a power electronic device.

The power electronic device may be any one of a battery energy storage system (BESS), a Voltage Source Converter (VSC), a High Voltage Direct Current (HVDC) converter, a Direct Current to Direct Current (DCDC) converter, a Direct Current to Alternating Current (DCAC) converter commonly known as an inverter, an Alternating Current to Direct Current (ACDC) converter, static compensator etc.

Embodiments herein provide a grid-forming control method for power electronic devices and products to be operated in off-grid mode. By reducing or limiting the inertia value in the power control loop to a minimum preset value, e.g. to a minimum possible value, during dynamic conditions when the magnitude of the current vector reaches a limit, e.g. a threshold, the proposed grid-forming control method and system enable the power electronic devices and products retaining synchronization during current saturation, even under high ROCOF conditions, thus ensuring a robust off-grid system. By retaining synchronism, but still staying within the current limit, the power electronic device and product can operate in grid-forming mode. This desirable feature allows the same control method and system to be implemented for grid-connected products as well, if the grid-code mandates grid-forming control for grid-connected products in future. The inertia value can be set by the customer working as isolated source and limited automatically and smoothly during current saturation. The inertia design still emulates the fundamental swing equation to realize the self-synchronization as the synchronous generators.

Thanks to its robustness and meeting the required specifications, the proposed grid-forming control method and system can be implemented in the varies products for off-grid scenario.

The proposed grid-forming control method and system have some advantages, for examples:

- Robust performance under frequency or phase disturbance compared to the state-of art solution for single or parallel inverter/converter operation.
- Unified control mode for both off-grid and grid-connected operation for possible future directions of grid-codes.
- Applicable to many products such as BESS, VSC, HVDC, ACDC, DCAC, DCDC converter products, static compensator etc.

Therefore, the embodiments herein provide an improved control method and system for power electronic products regarding, e.g. stability, robustness, cost, implementations etc.

## BRIEF DESCRIPTION OF THE DRAWINGS

Examples of embodiments herein are described in more detail with reference to attached drawings in which:

Figure 1 is a schematic block diagram illustrating a control system according to embodiments herein;

Figure 2 is a schematic block diagram illustrating an inertia-limited power control loop according to embodiments herein;

Figure 3 (a) and (b) are diagrams illustrating an example of inertia value setting according to embodiments herein;

Figure 4 (a), (b) and (c) are diagrams illustrating simulation results according to embodiments herein;

Figure 5 (a) and (b) are diagrams illustrating another example of inertia value setting according to embodiments herein;

Figure 6 (a), (b) and (c) are diagrams illustrating simulation results according to embodiments herein;

Figure 7 is a diagram illustrating simulation results according to embodiments herein;

Figure 8 is a flow chart illustrating a method performed by a control system according to embodiments herein; and

Figure 9 is a schematic block diagram illustrating a power electronic device in which the control method and system according to embodiments herein may be implemented.

## DETAILED DESCRIPTION

As a part of developing embodiments herein, problems and limitations of existing solutions will be further discussed.

In P. Imgart, et.al. "A cascaded power controller for robust frequency ride-through of grid-forming converters", Proc. IEEE Energy Convers. Congr. Expo. ,2022, pp.1-8, a grid-forming scheme based on cascaded power controllers, i.e. an Inertia Emulation Loop (IEL) cascaded with an Active Power Loop (APL), is developed. This grid-forming scheme separates the inertia into two parts. The APL part is for fast response during grid events or current saturation occasion. The IEL part is used for slow inertia response. The method ensures synchronism for high ROCOF values by having lowest possible inertia in the APL and emulating the required inertia in the IEL as a power reference to the APL. By doing so, the IEL and APL are completely decoupled. Hence, when the current saturates, the power reference to APL is limited and hence the inertia is naturally limited i.e., the inertia value is reduced from the rated value, i.e. the inertia value set or desired by the customer, to a minimum value emulated by the APL.

Though the method performs well under higher ROCOF, it fails to meet another requirement. When operating in off-grid mode, during a step change in load, the frequency sees a step change during the initial phase before the IEL gradually takes the frequency to its steady state value dictated by the power-frequency droop curve. The magnitude of the frequency step change is affected by the bandwidth of the APL. This presents a high ROCOF seen by other loads and VSCs connected to the off-gird network causing undesirable transients and tripping of loads and VSC's.

It is noticed that when emulating large inertia, high ROCOF leads to current saturation. When the current saturates, it is not possible anymore to continue emulating inertia since it would further lead to increase in power angle ending up with loss of synchronism.

The swing equation, which is a fundamental equation in dynamic power system used to describe the rotational behavior of synchronous machines such as generators or motors when subjected to disturbances, may be expressed as

$$2H\frac{d\omega_r}{dt} = \Delta P + D(\omega_r - \omega_g)$$

Where, H is inertia constant of the generator. It is a measure of the generator's ability to resist changes in rotational speed. $\frac{d\omega_r}{dt}$ is the rate of change of the rotor angular speed with respect to time and represents the acceleration or deceleration of the rotor. $\Delta P$ is the net power imbalance, which is the difference between the mechanical input power to the generator and the electrical output power. D is damping coefficient and represents the damping torque proportional to the speed deviation. It accounts for the damping effects such as friction and windage losses in the system. $\omega_r$ is the rotor angular speed, i.e. the actual speed of the rotor of the synchronous machine. $\omega_g$ is the synchronous angular speed, i.e. the reference speed at which the generator is supposed to run in synchronism with the grid frequency.

As it can be seen from the swing equation, by reducing the inertia $H$ to e.g. a minimum possible value, it is possible to retain synchronism and still be in grid-forming mode during current saturation.

According to embodiments herein, the inertia for a power control loop of a power electronic device, e.g. a converter, is reduced to a minimum pre-set value when the magnitude of the current vector reaches converter's limits during dynamic conditions. This is done to ensure the converter retains in synchronism, but still stays within the current limits and operates in Voltage Source Mode i.e., Grid-Forming mode.

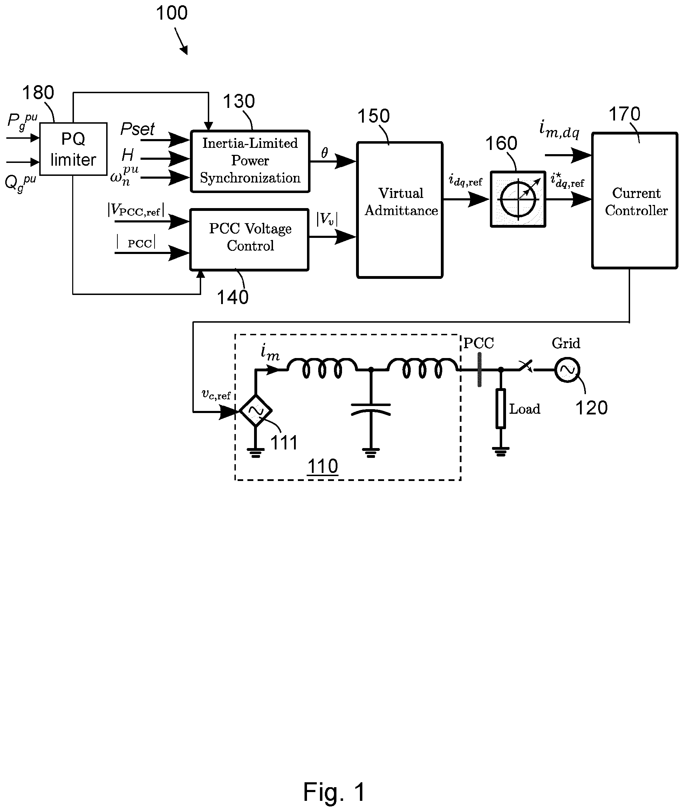

Fig. 1 is schematic block diagram showing a control system 100 for adjusting an output signal generated by a power electronic device in a power electronic system. The power electronic system is represented by an equivalent circuit shown in block 110, where the power electronic device is represented by a symbol 111. The power electronic system 110 further comprises an inductor-capacitor-inductor filter. The power electronic system 110 is configured to be connected to or disconnected from a power system network with an electrical grid represented by a symbol **120.** The output signal generated by the power electronic device 111 may be represented by a voltage vector $V_v$, $\delta_v$ with magnitude $V_v$ and angle $\delta_v$.

The control system 100 comprises an inertia-limited power synchronization module **130,** which may be referred as a virtual angle value generating module 130, for generating a virtual angle value $\theta$ for adjusting the angle $\delta_v$ of the voltage vector of the output signal. The virtual angle value $\theta$ generating module 130 receives parameters such as a power setting value $P_{set}$ set or desired by a customer, an inertia value **H,** a nominal frequency value $\omega_n^{pu}$, a measured output voltage $P_g^{pu}$ of the power electronic device 111.

The control system 100 comprises a PCC voltage control module **140,** where PCC is an abbreviation of Point of Common Coupling, and PCC voltage is the output voltage of the power electronic system 110 at the point of common coupling to the electricity grid 120 indicated by **PCC** in the figure. The PCC voltage control module 140 may be referred as a virtual voltage value generating module 140 for generating a virtual voltage value $|V_v|$ for adjusting the magnitude $V_v$ of the voltage vector of the output signal.

The control system 100 is configured to control the magnitude and frequency, i.e. the angle of the output signal generated by the power electronic device 111 based on the virtual angle value $\theta$ and virtual voltage value $|V_v|$.

To realize direct current limitation, inner current loop is needed. When the power angle and voltage references, i.e. the virtual angle value $\theta$ and virtual voltage value $|V_v|$ have obtained through the outer control loops i.e. the virtual angle value generating module 130 and the virtual voltage value generating module 140, a virtual admittance matrix and a current limiting module may be used to calculate a current reference.

Hence, the control system 100 may further comprise a virtual admittance module **150** to generate a reference current $i_{dq,ref}$ and a current limiting module **160** to scale the reference current and generate a scaled reference current $i_{dq,ref}^*$.

The control system 100 further comprises a current controller module **170** to generate a reference voltage $v_{c,ref}$ based on the scaled reference current $i_{dq,ref}^*$ and a measured current $i_{m,dq}$ of the power electronic device 111. Then the generated reference voltage $v_{c,ref}$ is used to control the magnitude and frequency of the output signal generated by the power electronic device 111.

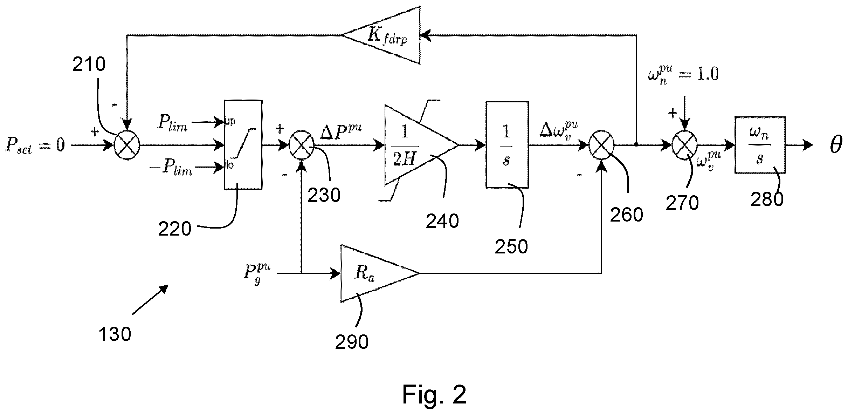

The function blocks or modules in the inertia-limited power synchronization module 130, i.e. the virtual angle value generating module 130, is shown in **Fig. 2** which is an inertia-limited power control loop. The virtual angle value generating module 130 comprises the following modules for generating the virtual angle value $\theta$ for adjusting the angle $\delta_v$ of the voltage vector of the output signal.

The virtual angle value generating module 130 comprises a first subtractor module **210** for generating a first power difference between a power setting $P_{set}$ value and a feedback value of power-frequency droop setting $K_{fdrp}$ of the power electronic device 110. The power setting value $P_{set}$ is a user set or customer desired value. The feedback value of power-frequency droop setting $K_{fdrp}$ is a control parameter to balance power generation and load demand while maintaining system stability and frequency within acceptable limits. It represents a proportional relationship between the change in power output and the change in frequency, and is usually expressed as a percentage, indicating how much the power output changes per unit frequency deviation.

The virtual angle value generating module 130 comprises a limiter module **220** for generating a limited first power difference by limiting the first power difference within a range of a first and second power limiting value $P_{lim}$, $-P_{lim}$.

The virtual angle value generating module 130 comprises a second subtractor module 230 for generating a second power difference $\Delta P^{pu}$ between the limited first power difference and a measured output power $P_g^{pu}$ of the power electronic device 110.

The virtual angle value generating module 130 comprises a multiplier module **240** for generating an adjusted power difference by multiplying the second power difference $\Delta P^{pu}$ with a factor i.e. $\frac{1}{2H}$ which is related to the inertia value H.

The virtual angle value generating module 130 comprises a first integrator **250** for generating a virtual frequency difference $\Delta\omega_v^{pu}$ by integrating the adjusted power difference.

The virtual angle value generating module 130 comprises a third subtractor **260** for generating a measured frequency difference between the virtual frequency

difference $\Delta\omega_v^{pu}$ and a frequency damping factor derived from the measured power e.g. by multiplying the measured output power $P_g^{pu}$ with a factor $R^g$, $P_g^{pu} \cdot R^g$ , where $R^g$ is a damping gain factor determined to achieve a certain control performance and stability.

The virtual angle value generating module 130 comprises an adder module 270 for generating a virtual frequency value $\omega_v^{pu}$ by adding a nominal frequency value $\omega_n^{pu}$ to the measured frequency difference.

The virtual angle value generating module 130 comprises a second integrator 280 for generating the virtual angle value $\theta$ for adjusting the angel $\delta_v$ of the output signal by integrating the virtual frequency value $\omega_v^{pu}$ .

The inertia value H may be varied between a maximum value and a pre-set minimum value based on a current magnitude $|I_m|$ of the output signal i.e. the current $i_m$ of the power electronic device 111. The inertia value $H$ may be varied linearly or non-linearly in relation to the current magnitude of $|I_m|$ the output signal.

The inertia value may be reduced to a minimum pre-set value when the magnitude of the current vector reaches converter limits during dynamic conditions. To realize the reduction of the inertia value $H$, there are several alternative implementations.

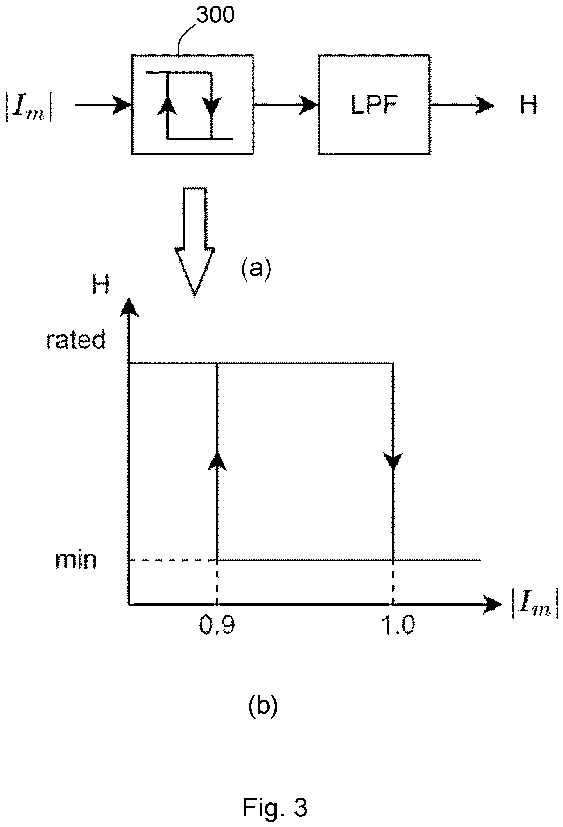

One example is hysteresis-band based implementation. The inertia value $H$ in the power control loop is reduced from its rated value to a minimum pre-set value when the current vector magnitude exceeds a set threshold limit. For example, the threshold limit may be set at 1.0 p.u. for a converter that has a soft-current limit at 1.1 p.u. and a hard-current limit of 1.2 p.u. To prevent any undesirable jitter in parameter transition i.e., the inertia value $H,$ a hysteresis band module is added as shown in **Fig.3,** where **(a)** shows a schematic block diagram of a hysteresis-band control module **300,** and **(b)** shows the relationship between the inertia value $H$ and the current magnitude $|I_m|$ of the output current of the electronic device 111. As can be seen from the Fig.3(b), when the current magnitude $|I_m|$ exceeds the upper limit e.g. 1.0 p.u., the inertia value $H$ is reduced to the pre-set minimum value min and stays at this value until the current magnitude $|I_m|$ goes lower than the lower limit e.g. 0.9 p.u.. Furthermore, a low-pass filter **LPF** is introduced at the output of the hysteresis band module 300 to smooth out sharp transition of the inertia value $H$.

Therefore, according to some embodiments herein, the inertia value $H$ may be generated by a hysteresis-band control module 300. A low-pass filter **LPF** may be added at the output of the hysteresis-band control module 300.

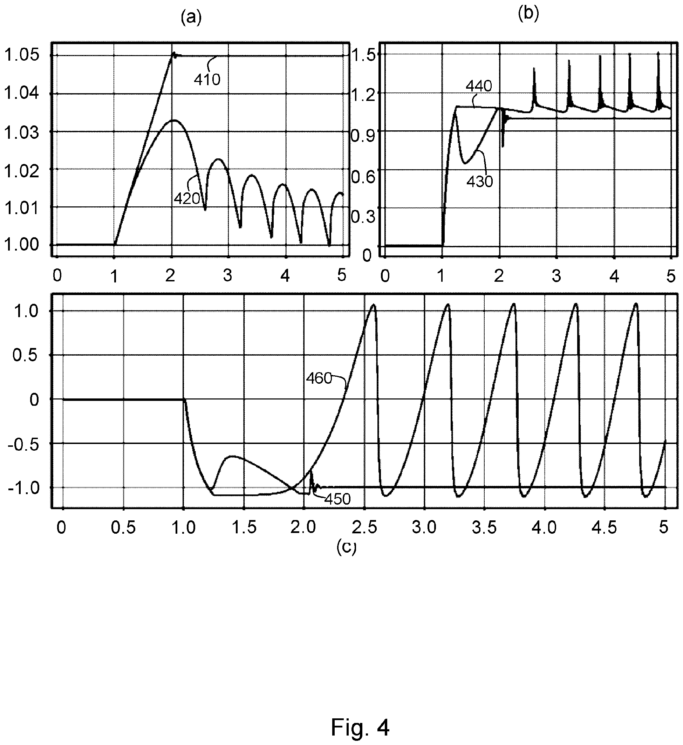

Simulations with the ROCOF of 2.5 Hz/s for 1 s are performed for the inertia-limited power control loop with the inertia value $H$ set by the hysteresis-band control module 300 and for the conventional power control without inertia limitation. The results are presented in Fig. 4 (a), (b), (c). Fig.4 (a) shows output signal frequency versus time, where curve **410** is the result from the proposed inertia-limited power control loop and curve **420** is the result from the conventional power control. Fig.4 (b) shows output power versus time, where curve **430** is the result from the proposed inertia-limited power control loop and curve **440** is the result from the conventional power control. Fig.4 (c) shows output current versus time, where curve **450** is the result from the proposed inertia-limited power control loop and curve **460** is the result from the conventional power control. As it can be seen, when the current magnitude exceeds 1 p.u., the inertia value $H$ is reduced to retain synchronism and the power delivered is maintained at 1 p.u. until the end of ROCOF period i.e., up to 2 s. After 2 s, the power delivered by the converter is determined by the power-frequency droop setting, which leads to 1 p.u. in this case. The phase current waveforms show that, during transients the current magnitude reaches the soft current limiter value of 1.1 p.u. and is limited to that value. It does not reach or exceed the hard current limiter value of 1.2 p.u. preventing from converter trip. During the transient, the converter maintains synchronism and stays in VSM as desired.

It is worth to note that the transient performance i.e., oscillations in the output power may be improved by proper selection of loop bandwidth in the hysteresis band module 300 and tuning of the inertia limited power control loop.

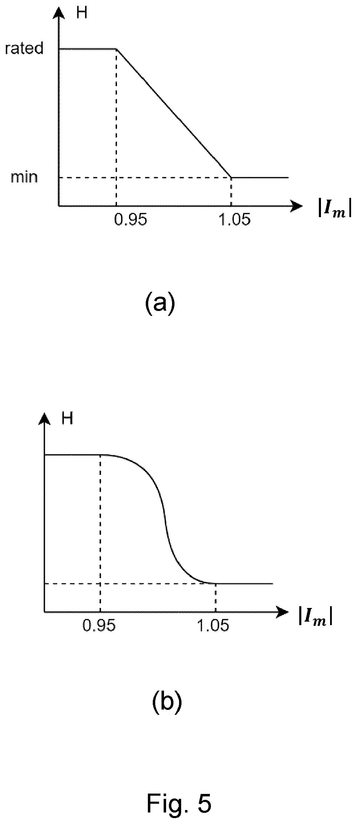

Another example is a look-up table based implementation. To further smoothen out the inertia value $H$ transition without sacrificing the dynamic performance, a look-up table based implementation may be used. **Fig. 5 (a)** is a diagram showing a linear relationship between the inertia value $H$ and the current magnitude $|I_m|$, where the inertia value $H$ is reduced from the **rated** value to a minimum pre-set value min when the current magnitude $|I_m|$ increases from 0.95 p.u. to 1.05 p.u. Thus, ensuring a smooth and linear variation in inertia value $H$ leading to a better dynamic response of the power and current waveforms of the output signal. Alternatively, the relationship between the current magnitude value $H$ and inertia value $H$ may be non-linear as shown in **Fig.5 (b).**

Therefore, according to some embodiments herein, the inertia value $H$ may be generated based on a look-up table or an equation representing a relationship between the inertia value $H$ and the current magnitude $|I_m|$ of the output signal. The inertia value ($H$) may be set to the pre-set minimum value when the current magnitude of $|I_m|$ the output signal exceeds a threshold.

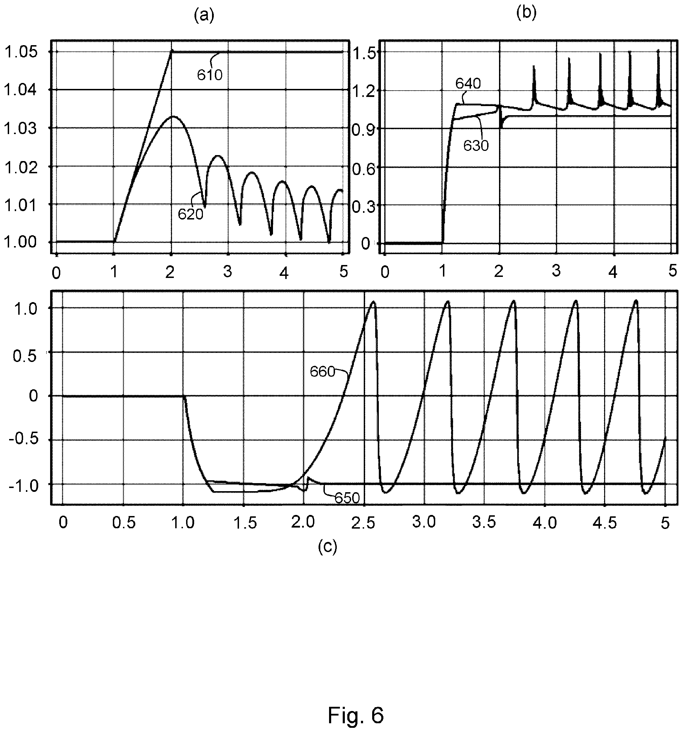

Simulations with the ROCOF of 2.5 Hz/s for 1 s are performed for the inertia-limited power control loop with the inertia value $H$ set by look-up table or equation and for the conventional power control without inertia limitation. The results are presented in Fig. 6 (a), (b), (c). Fig.6 (a) shows output signal frequency versus time, where curve **610** is the result from the proposed inertia-limited power control loop and curve **620** is the result from the conventional power control. Fig.6 (b) shows output power versus time, where curve **630** is the result from the proposed inertia-limited power control loop and curve **640** is the result from the conventional power control. Fig.6 (c) shows output current versus time, where curve **650** is the result from the proposed inertia-limited power control loop and curve **660** is the result from the conventional power control. As it can be seen, the dynamic performance is improved compared to the hysteresis band method and the converter currents are within the set soft limits. The converter remains in synchronism and retains to operate in VSM meeting the objectives.

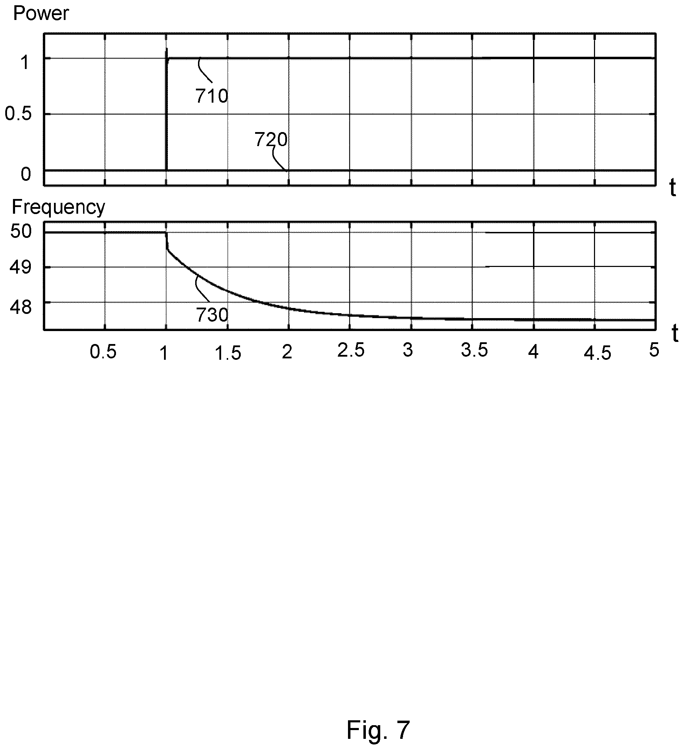

Additionally, simulations for step change in load during off-grid mode are performed and the results are presented in **Fig. 7,** where curve **710** is the active power, curve **720** is the reactive power and curve **730** is frequency. It can be seen that 1 p.u Load is connected at t=1s and the frequency curve 630 slowly and smoothly goes to 47.5 Hz according to droop control. A small step change in frequency is still observed during the initial phase which is contributed by the damping factor "Ra" and cannot be avoided.

In addition to the fundamental control structure proposed as shown in Fig. 1, an overall active power (P) and reactive power (Q) limiter, i.e. PQ limiter **180,** may be implemented at an outer most control loop which sets active and reactive power references to the inertia-limited power synchronization module 130, i.e. the inertia-limited power control loop and the PCC voltage control module 140. A PQ limiter is a control mechanism used in power electronic systems to regulate the active power (P) and reactive power (Q) outputs of devices. This control strategy is essential for maintaining stability, efficiency, and compliance with grid requirements. To ensure that the active and reactive power outputs of power electronic devices remain within specified limits and protect the devices and the grid from operating conditions that may cause instability or damage, the PQ limiter 180 continuously monitors the active and reactive power outputs of the electronic device 111. When either P or Q exceeds the predefined limits, the PQ limiter 180 adjusts the control inputs to bring the power outputs back within the acceptable range. For example, when the vector sum of P and Q exceeds the converter limits, P and Q are adjusted so that the sum is brought back within the converter limits. Priority may be given to P over Q during normal operation conditions, and Q over P during faults and voltage sag. For example, a normal operation condition may be when the voltage is above 0.95 p.u. and faults may be when the voltage is below that. Another example of prioritization may be that Q is always prioritized over P.

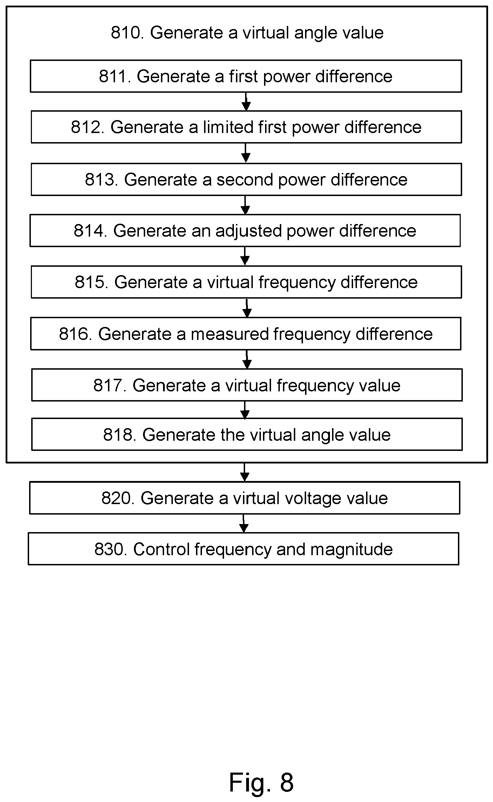

According to embodiments herein, a grid-forming control method performed by the control system 100 for adjusting a voltage vector of an output signal generated by the power electronic device 110 will be described with reference to **Fig. 8.** The method comprises the following actions which may be performed in any suitable order or simultaneously.

## Action 810

Generating, by e.g. the virtual angle value generating module 130, a virtual angle value $\theta$ for adjusting an angle $\delta_v$ of the voltage vector of the output signal.

## Action 820

Generating, by e.g. the virtual voltage value generating module 140, a virtual voltage value $|V_v|$ for adjusting the magnitude $V_v$ of the voltage vector of the output signal.

## Action 830

Controlling the frequency and magnitude of the output signal generated by the power electronic device 110 based on the virtual angle value $\theta$ and virtual voltage value $|V_v|$.

The Action 810 of generating the virtual angle value $\theta$ for adjusting the angle $\delta_v$ of the voltage vector may comprise the following actions.

## Action 811

Generating, by e.g. the first subtractor module 110, a first power difference between a power setting $P_{set}$ value and a feedback value of power-frequency droop setting $K_{f\,drp}$ of the power electronic device 110.

## Action 812

Generating, by e.g. the limiter module 120, a limited first power difference by limiting the first power difference within a range of a first and second power limiting value $P_{lim}$, $-P_{lim}$.

## Action 813

Generating, by e.g. the second subtractor module 130, a second power difference $\Delta P^{pu}$ between the limited first power difference and a measured output power $P_g^{pu}$ of the power electronic device 110.

**Action 814**

Generating, by e.g. the multiplier module 140, an adjusted power difference by multiplying the second power difference $\Delta P^{pu}$ with a factor 1/(2H) related to the inertia value $H$. The inertia value $H$ may be varied between a maximum value and a pre-set minimum value based on the current magnitude $|I_m|$ of the output signal of the power electronic device 110.

The inertia value $H$ may be varied linearly or non-linearly in relation to the current magnitude of $|I_m|$ the output signal.

The inertia value may be reduced to a minimum pre-set value when the magnitude of the current vector reaches a limit or threshold during dynamic conditions. The inertia value H may be set based on the current magnitude $|I_m|$ of the output signal using hysteresis-band based implementation or using a look-up table or an equation representing a relationship between the inertia value $H$ and the current magnitude of $|I_m|$ the output signal as discussed above.

**Action 815**

Generating, by e.g. the first integrator 250, a virtual frequency difference $\Delta\omega_v^{pu}$ by integrating the adjusted power difference.

**Action 816**

Generating, by e.g. the third subtractor 260, a measured frequency difference between the virtual frequency difference $\Delta\omega_v^{pu}$ and a frequency damping factor derived from the measured power $P_g^{pu} \cdot R^g$.

**Action 817**

Generating, by e.g. the adder module 270, a virtual frequency value $\omega_v^{pu}$ by adding a nominal frequency value $\omega_n^{pu}$ to the measured frequency difference.

**Action 818**

Generating, by e.g. the second integrator 280, the virtual angle value $\theta$ by integrating the virtual frequency value $\omega_v^{pu}$.

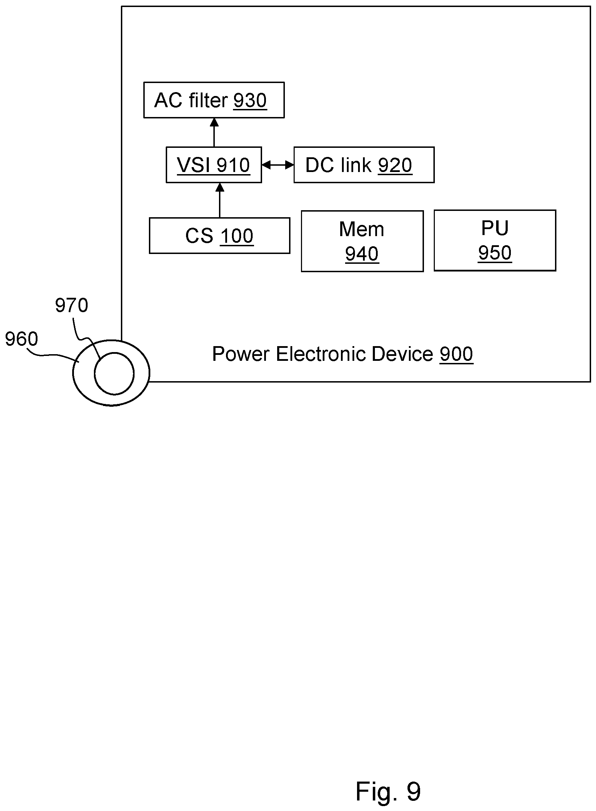

The control system 100 and method therein for controlling the output signal generated by the power electronic device 111 may be employed in various power devices or apparatus and systems. **Figure 9** shows a schematic block diagram for an example power electronic device **900** shown as a VSC. The power electronic device 900 may comprise e.g. a voltage source inverter (VSI) **910** which converts DC voltage into AC voltage which is to be synchronized with the grid frequency and voltage. The DC voltage may come from a renewable energy source like solar panels or wind turbines, or from an energy storage system. The VSI 910 is supplied with DC power from a DC link **920**. This link serves as an intermediate stage between the renewable energy source or energy storage system and the VSI 910. It may include components such as capacitors and DC-DC converters to stabilize and regulate the DC voltage. The electronic device 900 comprises the control system **CS 100** which may comprise voltage and/or current sensors to measure the output voltage and/or current of the electronic device 900. The electronic device 900 may comprise other modules, such as an AC filter **930,** a memory **940,** a processing unit **950** etc.

Although the power electronic device 900 shown in Fig.9 is a VSC. The power electronic device 900 may be any one of a BESS, HVDC, ACDC, DCAC, DCDC converter products, static compensator etc. The power electronic device 900 may be comprised in a power system network with an electrical grid and may be configured to be connected to the electrical grid. The power electronic device 900 may be configured to be operated in off-grid mode or on-grid mode.

Those skilled in the art will also appreciate that the virtual angle value generating module 130, the virtual voltage value generating module 140, the virtual admittance module 150, the current limiting module 160, the current controller module 170, the PQ limiter 180 and the modules 210-280 in the virtual angle value generating module 130, e.g. the first subtractor module 210, the limiter module 220, the second subtractor module 230, the multiplier module 240, the first integrator 250, the third subtractor 260, the adder module 270, the second integrator 280 etc. may be referred to as one circuit or one module, a combination of analog and digital circuits, one or more processors configured with software and/or firmware and/or any other digital hardware performing the function of each module. Further, the control system 100 or one or more of these processors may comprises other control algorithms or controller e.g. Pulse Width Modulation (PWM) to ensure the VSC operates correctly and efficiently, the combination of analog and digital circuits as well as the other digital hardware, may be included in a single application-specific integrated circuitry (ASIC), or several processors and various analog/digital hardware may be distributed among several separate components, whether individually packaged or assembled into a system-on-a-chip (SoC).

The embodiments herein for controlling the output signal generated by the power electronic device 900 may be implemented through one or more processors, such as the processing unit PU 950 in the power electronic device 900, together with computer program code for performing the functions and actions of the embodiments herein. The program code mentioned above may also be provided as a computer program product 960, for instance in the form of a data carrier carrying computer program code 970 for performing the embodiments herein when being loaded into the power electronic device 900. One such carrier may be in the form of a CD ROM disc. It is however feasible with other data carriers such as a memory stick. The computer program code 970 may also be stored locally in a ROM/RAM in a control board of the power electronic device 900 and flashed on to the PU 950 when powering ON the control board. The computer program code 970 may furthermore be provided as pure program code on a server or cloud and downloaded to the power electronic device 900.

To summarize, the grid-forming control method and system 100 for the power electronic device can achieve the following performances and functions:

- Introducing inertia and keeping frequency stable when the power electronic device connects to the external source or loads.
- Providing enough damping during self-synchronization and faults.
- Providing AC voltage control, outputting stable voltage and compensating voltage drop from the virtual and inductor capacitor (LCL) impedance.
- Providing virtual impedance, emulating a virtual stator impedance to reduce the current exchanged with the grid during transient period.
- Providing current control and voltage feedforward, introducing damping from proportional gain and providing direct current limitation.

The proposed grid-forming control method and system 100 have some advantages, for examples:

- Robust performance under frequency or phase disturbance compared to the state-of art solution for single or parallel inverter/converter operation.
- Providing unified control mode for both off-grid and grid-connected operation for possible future directions of grid-codes. Grid-connected devices must comply with various grid-codes and standards set by regulatory authorities. These codes specify requirements for voltage and frequency regulation, power factor control, fault ride-through capability, and other aspects of grid integration.
- Applicable to many products such as BESS, VSC, HVDC, ACDC, DCAC, DCDC converter products, static compensator etc.

The word "comprise" or "comprising", when used herein, shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appended claims.

**Claims**

1. A grid-forming control method for adjusting a voltage vector ($V_v$, $\delta_v$) of an output signal generated by a power electronic device (110, 900), the method comprising:

generating (810), by a virtual angle value generating module (130), a virtual angle value ($\theta$) for adjusting an angle ($\delta_v$) of the voltage vector of the output signal;
generating (820), by a virtual voltage value generating module (140), a virtual voltage value ($|V_v|$) for adjusting the magnitude ($V_v$) of the voltage vector of the output signal; and
controlling (830) the frequency and magnitude of the output signal generated by the power electronic device (110, 900) based on the virtual angle value ($\theta$) and virtual voltage value ($|V_v|$); and
wherein the virtual angle value ($\theta$) is generated based on an inertia value ($H$), a measured power and frequency of the output signal, and the inertia value ($H$) is set such that it is varied between a maximum value and a pre-set minimum value based on a current magnitude ($|I_m|$) of the output signal of the power electronic device (110, 900).

2. The method according to claim 1, wherein generating the virtual angle value ($\Theta$) comprises:

generating (811), by a first subtractor module (210), a first power difference between a power setting ($P_{set}$) value and a feedback value of power-frequency droop setting ($K_{fdrp}$) of the power electronic device;
generating (812), by a limiter module (220), a limited first power difference by limiting the first power difference within a range of a first and second power limiting value ($P_{lim}$, $-P_{lim}$);
generating (813), by a second subtractor module (230), a second power difference ($\Delta P^{pu}$) between the limited first power difference and a measured output power ($P_g^{pu}$) of the power electronic device;
generating (814), by a multiplier module (240), an adjusted power difference by multiplying the second power difference ($\Delta P^{pu}$) with a factor (1/(2H)) related to an inertia value ($H$);

generating (815), by a first integrator (250), a virtual frequency difference ( $\Delta\omega_v^{pu}$ ) by integrating the adjusted power difference;
generating (816), by a third subtractor (260), a measured frequency difference between the virtual frequency difference ( $\Delta\omega_v^{pu}$ ) and a frequency damping factor derived from the measured power ( $P_g^{pu} \cdot R^g$ );
generating (817), by an adder module (270), a virtual frequency value ( $\omega_v^{pu}$ ) by adding a nominal frequency value ( $\omega_n^{pu}$ ) to the measured frequency difference; and
generating (818), by a second integrator (280), the virtual angle value ($\theta$) by integrating the virtual frequency value ( $\omega_v^{pu}$ ).

3. The method according to any one of claims 1-2, wherein the inertia value ($H$) is varied linearly or non-linearly in relation to the current magnitude of ($|I_m|$) the output signal.

4. The method according to claim 3, wherein the inertia value ($H$) is generated based on a look-up table or an equation representing a relationship between the inertia value ($H$) and the current magnitude of ($|I_m|$) the output signal.

5. The method according to any one of claims 3-4, wherein the inertia value ($H$) is set to the pre-set minimum value when the current magnitude ($|I_m|$) of the output signal exceeds a threshold.

6. The method according to any one of claims 1-2, wherein the inertia value ($H$) is generated based on a Hysteresis-band control module (300).

7. The method according to claim 6, wherein when the current magnitude exceeds an upper limit, the inertia value ($H$) is reduced to the pre-set minimum value and stays at this value until the current magnitude goes lower than a lower limit.

8. The method according to any one of claims 6-7, wherein a low-pass filter (LPF) is added at the output of Hysteresis-band control module (300).

9. A control system (100) configured to adjust a voltage vector ($V_v$, $\delta_v$) of an output signal generated by a power electronic device (110), the control system (100) is configured to:

generate, by a virtual angle value generating module (130), a virtual angle value ($\theta$) for adjusting an angle ($\delta_v$) of the voltage vector of the output signal;
generate, by a virtual voltage value generating module (140), a virtual voltage value ($|V_v|$) for adjusting the magnitude ($V_v$) of the voltage vector of the output signal; and
control the frequency and magnitude of the output signal generated by the power electronic device (110, 900) based on the virtual angle value ($\theta$) and virtual voltage value ($|V_v|$); and
wherein the control system (100) is configured to generate the virtual angle value ($\theta$) based on an inertia value ($H$), a measured power and frequency of the output signal, and the control system (100) is configured to set the inertia value ($H$) based on a current magnitude ($|I_m|$) of the output signal of the power electronic device (110, 900) such that it is varied between a maximum value and a pre-set minimum value.

10. The control system (100) according to claim 9, wherein the control system (100) is configured to generate the virtual angle value ($\Theta$) by being configured to:

generate, by a first subtractor module (210), a first power difference between a power set ($P_{set}$) value and a feedback value of power-frequency droop setting ($K_{fdrp}$) of the power electronic device;
generate, by a limiter module (220), a limited first power difference by limiting the first power difference within a range of a first and second power limiting value ($P_{lim}$, $-P_{lim}$);
generate, by a second subtractor module (230), a second power difference ($\Delta P^{pu}$) between the limited first power difference and a measured output power ( $P_g^{pu}$ ) of the power electronic device;
generate, by a multiplier module (240), an adjusted power difference by multiplying the second power difference ($\Delta P^{pu}$) with a factor (1/(2H)) related to an inertia value ($H$);
generate, by a first integrator (250), a virtual frequency difference ( $\Delta\omega_v^{pu}$ ) by integrating the adjusted power difference;
generate, by a third subtractor (260), a measured frequency difference between the virtual frequency difference ( $\Delta\omega_v^{pu}$ ) and a frequency damping factor derived from the measured power ( $P_g^{pu} \cdot R^g$ );

generate, by an adder module (270), a virtual frequency value ( $\omega_v^{pu}$ ) by adding a nominal frequency value ( $\omega_n^{pu}$ ) to the measured frequency difference; and

generate, by a second integrator (280), the virtual angle value ($\theta$) by integrating the virtual frequency value ( $\omega_v^{pu}$ ).

**11.** The control system (100) according to any one of claim 9-10, wherein the control system (100) is configured to vary the inertia value (*H*) linearly or non-linearly in relation to the current magnitude ($|I_m|$) of the output signal.

**12.** The control system (100) according to claim 11, wherein the control system (100) is configured to set the inertia value (*H*) based on a Hysteresis-band control module, or a look-up table or an equation representing a relationship between the inertia value (*H*) and the current magnitude of ($|I_m|$) the output signal.

**13.** The control system (100) according to any one of claims 9-12, wherein the control system (100) is configured to set the inertia value (*H*) to the preset minimum value when the current magnitude ($|I_m|$) of the output signal exceeds a threshold.

**14.** A power electronic device (900) comprises a control system (100) according to any one of claims 9-13.

**15.** The power electronic device (900) according to claim 14 is any one of a battery energy storage system, BESS, a Voltage Source Converter, VSC, a High Voltage Direct Current, HVDC, converter, a Direct Current to Direct Current, DCDC, converter, a Direct Current to Alternating Current, DCAC, converter, an Alternating Current to Direct Current, ACDC, converter, static compensator.

**16.** The power electronic device (900) according to any one of claims 14-16, wherein the power electronic device (900) is comprised in a power system network with an electrical grid and is configured to be connected to the electrical grid, and to be operated in off-grid mode or on-grid mode.

**17.** A computer program product (960) comprising program code (970) which when the program is executed by a computer or processor, causes the computer or processor to carry out the method according to any one of claims 1-8.

100

180          130          150

$P_g{}^{pu}$ →  ┌─────┐   Pset →  ┌──────────────┐       ┌──────────────┐
              │  PQ  │   H →     │Inertia-Limited│  θ    │              │
              │limiter│  $\omega_n^{pu}$ → │   Power    │ ───→  │   Virtual    │
$Q_g{}^{pu}$ → └─────┘           │Synchronization│       │  Admittance  │
                                 └──────────────┘       │              │
        $|V_{\mathrm{PCC,ref}}|$ → ┌──────────────┐ $|V_v|$│              │
                                   │ PCC Voltage  │ ───→  │              │
        $|\mathrm{PCC}|$ →         │   Control    │       └──────────────┘
                                   └──────────────┘
                                        140

$i_{m,dq}$
           160          170

$i_{dq,\mathrm{ref}}$ →  ◯  $i^{\star}_{dq,\mathrm{ref}}$ →  ┌──────────────┐
                                                            │   Current    │
                                                            │  Controller  │
                                                            └──────────────┘

$i_m$          PCC        Grid

$v_{c,\mathrm{ref}}$

111    110         Load        120

Fig. 1

Fig. 2

300

$|I_m| \longrightarrow$ ⟶ LPF ⟶ H

(a)

H

rated

min

0.9        1.0        $|I_m|$

(b)

Fig. 3

(a)

(b)

(c)

Fig. 4

(a)

(b)

Fig. 5

Fig. 6

Fig. 7

810. Generate a virtual angle value

811. Generate a first power difference

812. Generate a limited first power difference

813. Generate a second power difference

814. Generate an adjusted power difference

815. Generate a virtual frequency difference

816. Generate a measured frequency difference

817. Generate a virtual frequency value

818. Generate the virtual angle value

820. Generate a virtual voltage value

830. Control frequency and magnitude

Fig. 8

AC filter 930

VSI 910 ↔ DC link 920

CS 100

Mem 940

PU 950

970
960

Power Electronic Device 900

Fig. 9

Europäisches
Patentamt

European
Patent Office

Office européen
des brevets

# EUROPEAN SEARCH REPORT

**Application Number**

EP 24 19 4303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REN MINGWEI ET AL: "Coordinated Control Strategy of Virtual Synchronous Generator Based on Adaptive Moment of Inertia and Virtual Impedance", IEEE JOURNAL ON EMERGING AND SELECTED TOPICS IN CIRCUITS AND SYSTEMS, IEEE, PISCATAWAY, NJ, USA, vol. 11, no. 1, 13 January 2021 (2021-01-13), pages 99-110, XP011842181, ISSN: 2156-3357, DOI: 10.1109/JETCAS.2021.3051320 [retrieved on 2021-03-10] | 1,3-5,9, 11,13-17 | INV. H02J3/24 H02J3/38 H02J3/46 |
| Y | * page 101, paragraph II - paragraph IV; figures 1,2,4 * | 2,6-8, 10,12 | |
| Y | HAISHENG XU ET AL: "Stability Analysis and Control Strategy for Multi-Machine Parallel System with Grid-Forming Inverters", 2024 6TH ASIA ENERGY AND ELECTRICAL ENGINEERING SYMPOSIUM (AEEES), IEEE, 28 March 2024 (2024-03-28), pages 146-151, XP034614852, DOI: 10.1109/AEEES61147.2024.10544390 [retrieved on 2024-06-11] | 2,10 | |
| A | * page 149, paragraph II.; figure 2 * | 6-8,12 | |

-----

-----

-/--

**TECHNICAL FIELDS SEARCHED (IPC)**

H02J

The present search report has been drawn up for all claims

| Place of search | Date of completion of the search | Examiner |
|---|---|---|
| Munich | 13 January 2025 | Maucher, Bastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 19 4303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WU HENG ET AL: "Control of Grid-Forming VSCs: A Perspective of Adaptive Fast/Slow Internal Voltage Source", IEEE TRANSACTIONS ON POWER ELECTRONICS, INSTITUTE OF ELECTRICAL AND ELECTRONICS ENGINEERS, USA, vol. 38, no. 8, 18 April 2023 (2023-04-18), pages 10151-10169, XP011943770, ISSN: 0885-8993, DOI: 10.1109/TPEL.2023.3268374 [retrieved on 2023-04-19] * page 10156, paragraph C; figure 8 * ----- | 6-8,12 | |
| | | | **TECHNICAL FIELDS SEARCHED (IPC)** |

The present search report has been drawn up for all claims

| Place of search | Date of completion of the search | Examiner |
|---|---|---|
| Munich | 13 January 2025 | Maucher, Bastian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  & : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. IMGART**. A cascaded power controller for robust frequency ride-through of grid-forming converters. *Proc. IEEE Energy Convers. Congr. Expo.*, 2022, 1-8